# EUROPEAN PATENT SPECIFICATION

(11) **EP 2 190 712 B1**
(45) Date of publication and mention of the grant of the patent: **27.02.2013**
(21) Application number: 08802696.8
(22) Date of filing: 29.09.2008
(51) Int. Cl.: B60T 8/88, B62D 5/00, B60W 50/02, F02D 11/10, F16H 61/12, G05B 9/03, G06F 11/07, B60W 50/029

(54) **A CONTROL SYSTEM FOR VEHICLES**
STEUERSYSTEM FÜR FAHRZEUGE
SYSTÈME DE COMMANDE POUR VÉHICULES

(30) Priority: 28.09.2007 DE 102007046706
(43) Date of publication of application: 02.06.2010
(73) Proprietor: Autoliv Development AB, 447 83 Vårgårda (SE)
(72) Inventor: WILLERTON, Mark, S-592 42 Vadstena (SE); WEICHENBERGER, Lothar, 86669 Klingmoos (DE)
(74) Representative: Laufhütte, Dieter
(86) International application number: PCT/EP2008/008264
(87) International publication number: WO 2009/040137

(56) References cited:
- WO-A-2004/029737
- DE-A1- 4 212 337
- DE-A1- 4 439 060
- DE-A1- 19 716 197
- DE-A1- 19 717 686

## Description

The invention relates to a control system for vehicles and in particular for the control of vehicle safety devices in accordance with the preamble of claim 1.

Controllers for measurement work, control work and feedback control work are used in the field of vehicle electronics. The steps required to carry out this work are described in programs or routines and are predominantly executed on a processor. Specific measures must be provided in dependence on the safety demands of the system to secure against systematic and spontaneous malfunction. It is known for this purpose to use control computers for critical safety systems in vehicles such as in electronic braking systems, electronic stability programs and electrohydraulic brakes. The so-called electronic regulators or controllers already have physical and/or functional default planes today in dependence on the embodiment variant.

Such a hydraulic default plane is realised, for example, in a known manner in that the electronic ABS controller is deactivated in the event of a malfunction in an anti-lock braking system. The hydraulic valves which are currentless with a deactivated controller are designed so that a usual braking can still be carried out without the anti-lock system.

An emergency operation or a restricted operation can therefore be ensured on the failure of the system or of system parts. A functional default plane can likewise be realised in a similar manner. If, for example, a complex high-order software function - such as an electronic stability program - is faulty, it is shut down, with the software of a lower order, for example an anti-lock system, still remaining operable.

The use of safe electronic hardware for the control and regulation of vehicle functions is constantly increasing in vehicles. In this context, the focus is in particular on a high reliability and a fault-tolerant embodiment of the electronic devices.

A fault-tolerant electronic controller is known from WO 03/050624 A1 whose availability and safety with respect to the microprocessor system is better than is the case with previously known microprocessor concepts. For this purpose, a multicore redundant control computer system is provided in which at least two control computers are connected to one another. They are equipped, in addition to respectively having a computer core, with partially redundant or fully redundant peripheral elements and partially redundant or fully redundant memory elements and are integrated on a shared chip carrier or a shared chip, with the at least two control computers being connected to at least one shared first arbitration unit which monitors the control computers for an error function.

Similar safety mechanisms are known from DE 103 50 919 A1, which relates to a controller and to an acceleration sensor system and from EP 0 728 635 B1 which relates to a control system for an occupant protection device.

A complete fault-tolerance is not required for most safety applications. On the occurrence of a fault, the system must, however, be fail safe. Future developments in the automotive sector will, however, make increasingly higher demands on the safety systems. The purely electronic control of vehicles is named here by way of example which e.g. completely dispenses with the presence of mechanical steering gears or which only controls the use of brakes electronically. If, for example, a fault should occur in the case of an electronic control of the brakes, no replacement hydraulic system is available. A fault-tolerance system is indispensable in this application case.

DE 197 17 686 A1 refers to a circuit arrangement for vehicle control systems. The systems consists of two separated circuits each comprising a microprocessor system 1, 2, a signal input means 3, 4 connected to the respective microprocessor system 1, 2, switches 9, 10 and actuators 5, 6.

It is therefore the object of the present invention to provide control systems for vehicles which are both fail-safe and fault-tolerant in operation. At the same time, the control system should have as few components as possible.

This object is solved by a control system for vehicles in accordance with claim 1. This solution consists of a control system for vehicles, in particular for the control of vehicle safety devices, comprising at least two control means which each communicate with at least one operating means, with the control means each being connected to a check means which can suppress the forwarding of check means data. In accordance with the invention, a redundant control means can additionally be associated with each control means and has a control algorithm which is equivalent to the control algorithm of the control means.

Preferred embodiments of the solution in accordance with claim 1 result from claims 2 to 8.

In a first preferred embodiment the check means can suppress the forwarding of check means data via a switching means.

In a further embodiment of the invention a respective decision means can be connected after the control means and the data from the switching means connected after the control means and from the redundant control means are supplied to said decision means.

Status data of the check means can be supplied to the decision means. The fault-free operation of the check means can hereby be checked by the decision means.

The control system advantageously consists of two subsystems in which the check means of the individual subsystems are arranged in an apparatus and a control system of a subsystem is likewise arranged with the redundant control system of the other subsystem in a respective device.

A subsystem is to be understood in each case here as a system which, on the one hand, has a control means and a check means and a redundant control means. In accordance with this solution, the two subsystems are connected to one another locally in that the check means are realised together in an apparatus, for example a chip. In a further device, the control system of the first subsystem is realised with the redundant control system of the second subsystem, whereas in a third device, the redundant control system of the first subsystem is included in the control system of the second subsystem.

In accordance with a further embodiment of the invention, a simplified control algorithm is implemented in each check means, said simplified control algorithm mapping the control function in a simplified manner and forwarding these simplified control data to the associated decision means of the subsystem. The decision means can thus check whether the value of the control means is disposed within the expected results range which is calculated in a simplified manner and which is communicated to the simplified control algorithm in the check means.

In accordance with a further preferred aspect of the invention, the first subsystem represents a control system for active safety components and the second subsystem represents a control system for passive safety components.

Further details and advantages of the invention result from embodiments explained in the following with reference to the drawing. There are shown:
- Figure 1 - 7: in each case, simplified schematic diagrams according to the present invention of different control systems in accordance with the invention; and
- Figure 8:: another schematic representation of a control system in accordance with the invention.

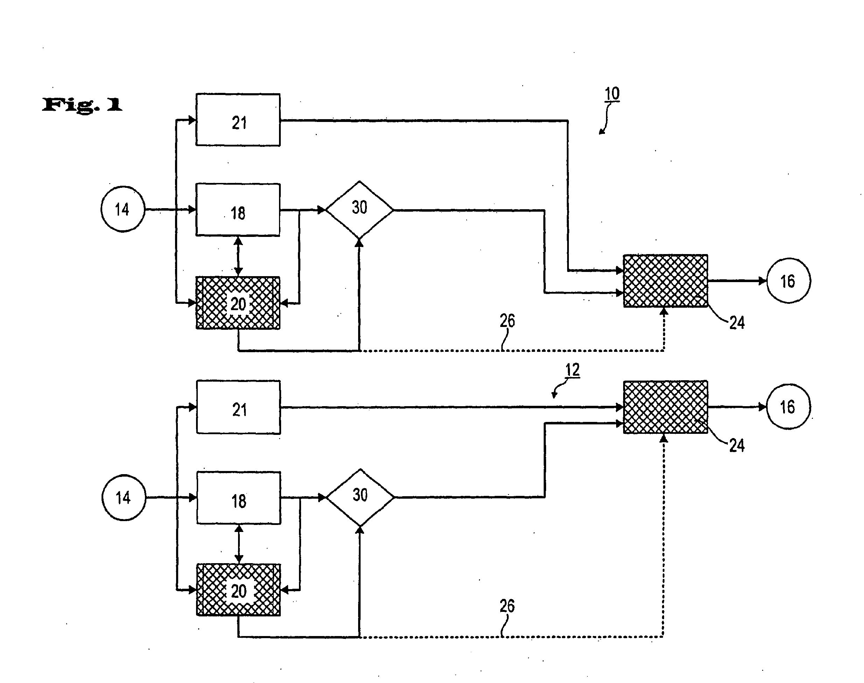

A control system in accordance with the invention is shown in Figure 1. A safety system architecture is realised here which includes two independent subsystems 10 and 12. Data of one or more sensors 14 are fed into each subsystem. The subsystems communicate with operating means, for example actuators 16. Each of the subsystems 10 and 12 shown here includes a control means 18. The respective control means 18 communicate with check means 20 which are connected in parallel and which check the function of the control means 18, as is shown by the double arrow. If the check means 20 find that the control means 18 is not working without problem, the data stream from the control means 18 is interrupted via a switching means 30.

In the safety system architecture as shown in Figure 1, a redundant control means 21 whose output data are supplied directly to the decision means 24 is provided here in each subsystem. A control algorithm is implemented in the redundant control means 21 which works differently, but equivalently, to the control algorithm of the control means 18.

A homogeneous redundancy is provided by such a realisation of two control paths. To minimize the risk of failure between the two control means 18 and 21, different implementing methods should be selected where possible for the implementation of the algorithm. Furthermore, the corresponding algorithms for the control means 18 and 21 can also each be realised by respective different programmers by different tools or the like. The power supply not otherwise shown in any more detail here should also, where possible, ensure that independent power supply paths are available here. Status data on the control means 18 and 21 red respectively which are evaluated by the decision means for the control of the operating means 16 can also be supplied additionally in the decision means 24 via the data line 26 in addition to the flow data of the check means 20.

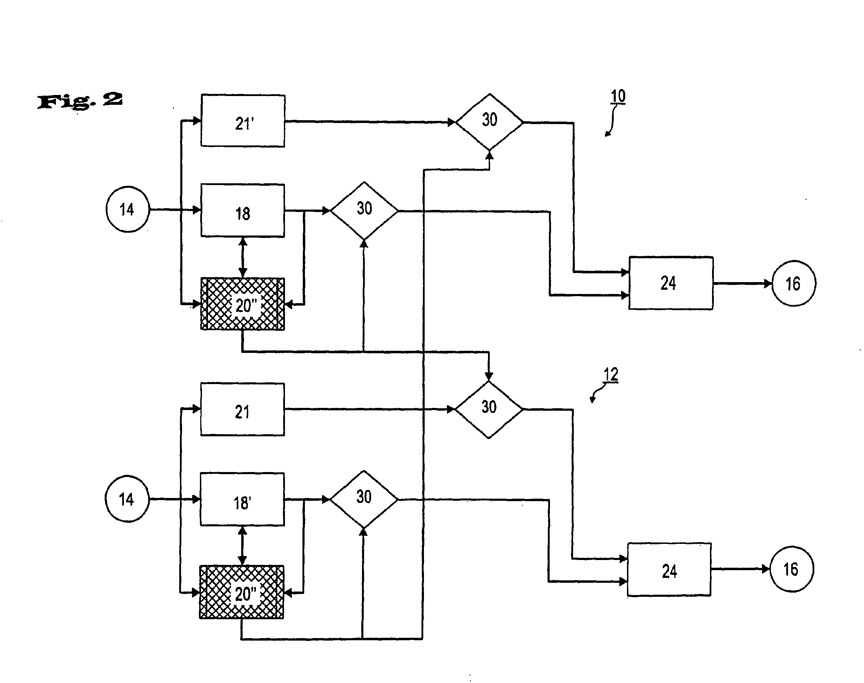

The embodiment variant in accordance with Figure 2 corresponds in a large part to that in accordance with Figure 1. However, specific functions are here realised on preset devices on specific chips. It is indicated by the indexing which components are realised on a common chip. The check means 20" are realised on a first common chip. The control means 18 of the first decision maker is realised together with the redundant control means 21 of the second decision maker on a second chip. The control means 18' of the second subsystem is realised together with the redundant control means 21' on a third chip. The check means 20" thus monitor both the control means 18 and the redundant control means 21 of the respective subsystem 10 and 12, as results from the wiring in accordance with Figure 2.

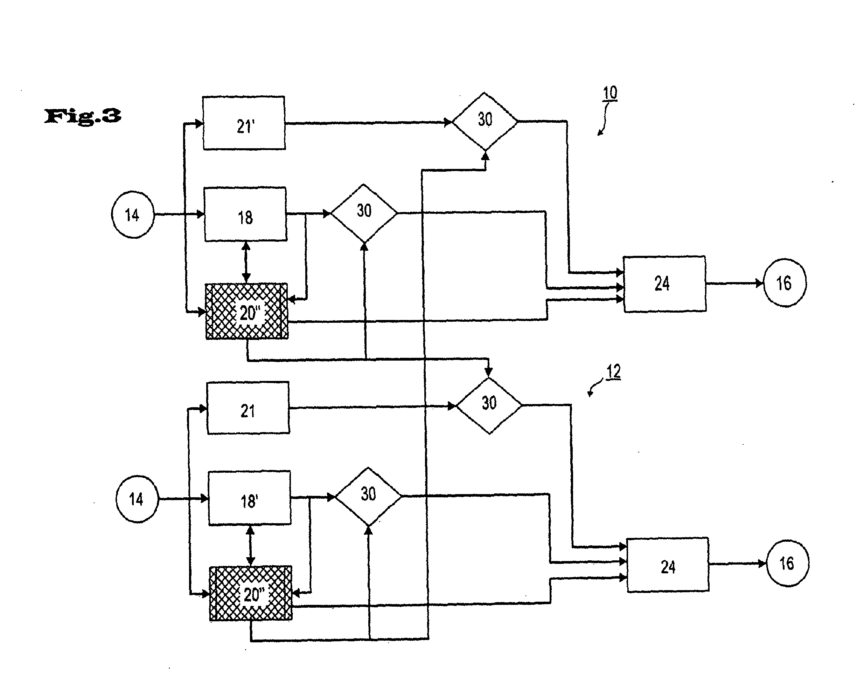

The embodiment in accordance with Figure 3 substantially builds on that in accordance with Figure 2. The same parts are again also marked by the same reference numerals here. In this embodiment, simplified versions of the control algorithm such as was realised in the monitored control means are additionally realised in the respective check means 20". An additional security hereby takes place. The data from the control means 18, 18' and from the redundant control means 21', 21 as well as the security via the simplified algorithm of the check means are supplied for each subsystem 10 and 12 to the decision means 24 which then control the corresponding operating means.

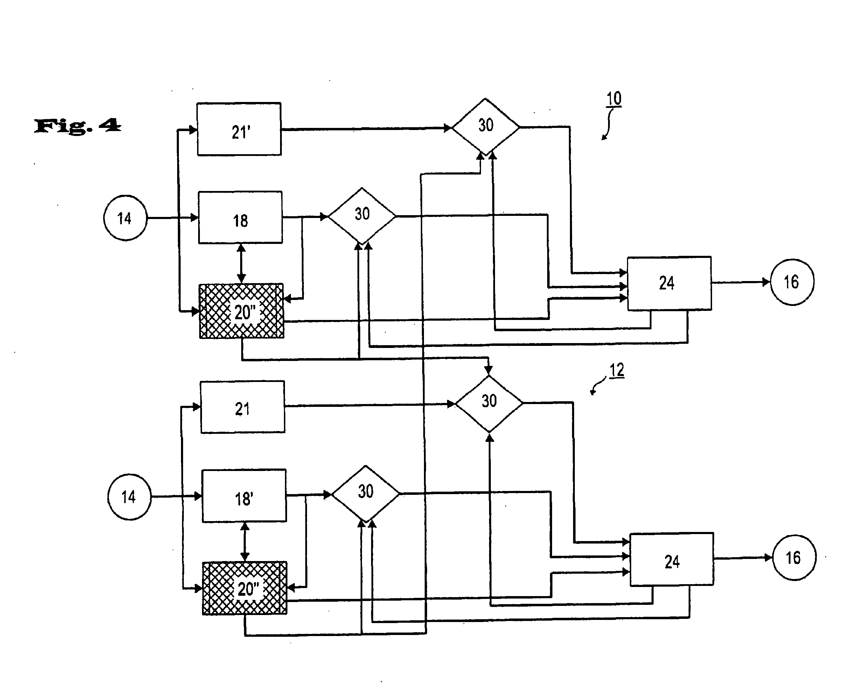

The embodiment In accordance with Figure 4 substantially corresponds to that in accordance with Figure 3. The decision means 24 is here made as an intelligent component which has the capability of recognising faulty data from the control means 18, 18' or from the redundant control means 21, 21' and of suppressing them via the respective switching means 30. For this purpose, corresponding data lines are provided between the decision means 24 and the switching means 30. According to a decision priority, the decision means 24 in the aspect of this embodiment will preferably suppress the data stream of the redundant control means 21, 21'.

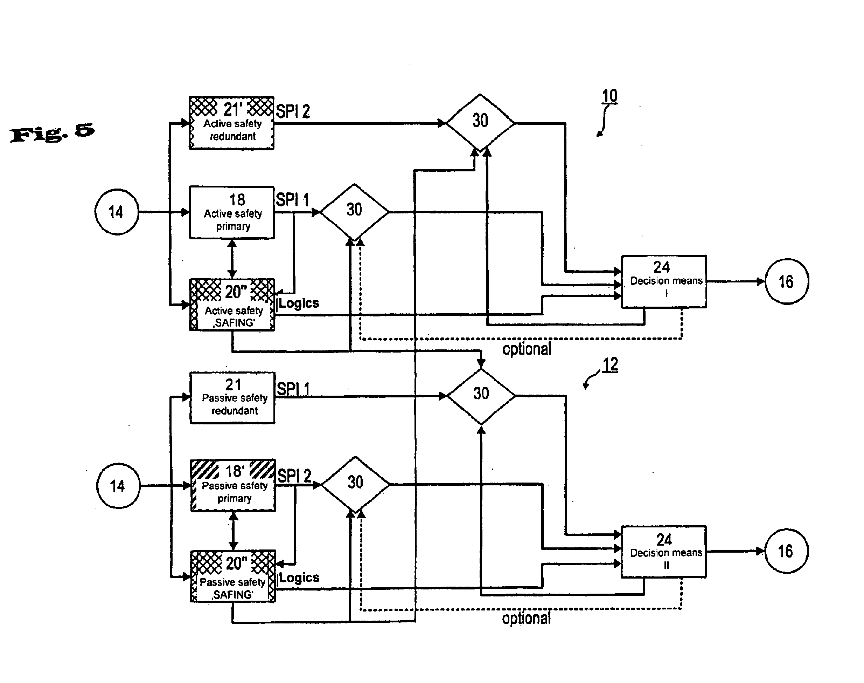

An embodiment of a system architecture in accordance with Figure 4 is shown in Figure 5. The first subsystem is here made as an active safety system and the second subsystem as a passive safety system. The data flows are forwarded from the control means 18, 18' and 21, 21' respectively as an SPI bus (serial peripheral interface), whereas the data stream of the respective check means is forwarded in a simple logical data line.

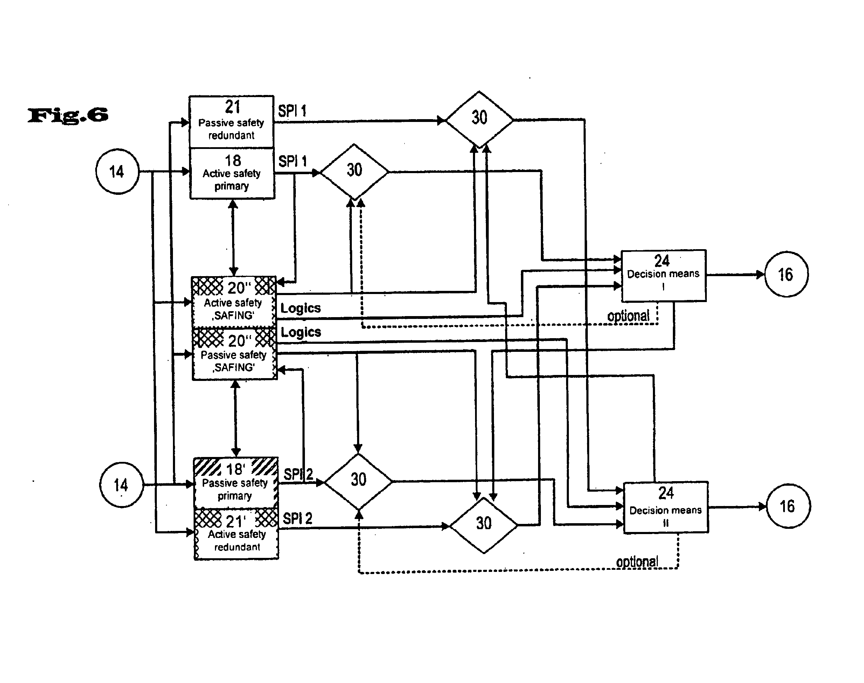

Figure 6 contains the identical implementation as Figure 5. The respective components, which are arranged on a chip, are, however, combined here.

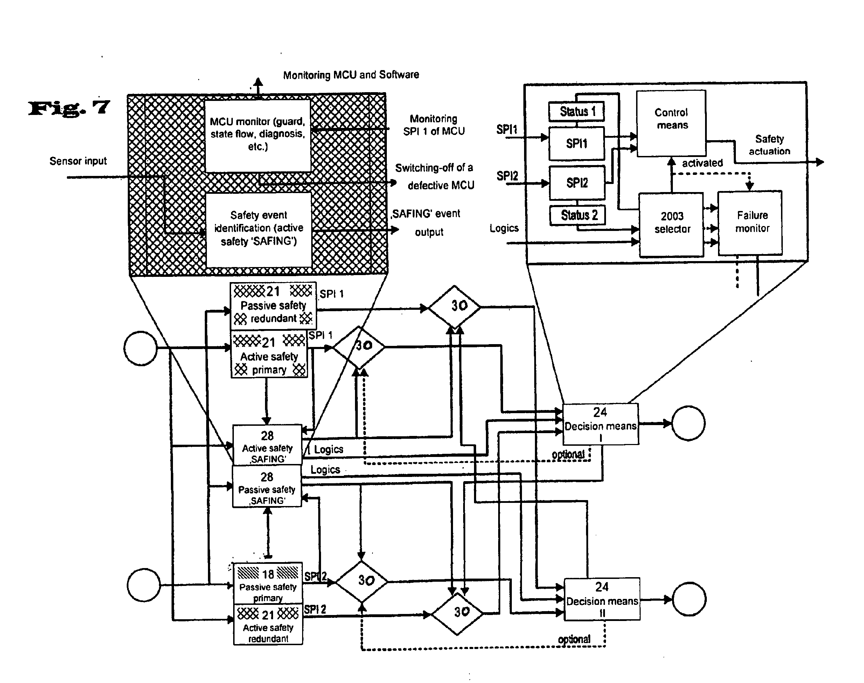

The representation in accordance with Figure 7 shows the internal structure of the check means 20" as well as the internal structure of the decision means 24. As can be seen from the internal structure of the check means 20", it takes over two tasks, namely the monitoring of the operations of the associated control means of the chip on which the respective control means is arranged, on the one hand. On the other hand, the simplified algorithm (safety event identification - active safety saving) is carried out.

The data of the control means and of the redundant control means are checked in the decision means (inputs SPI1 and SPI2). On the occurrence of faults, these faulty data are suppressed when they are recognised (cf. failure monitor in Figure 7).

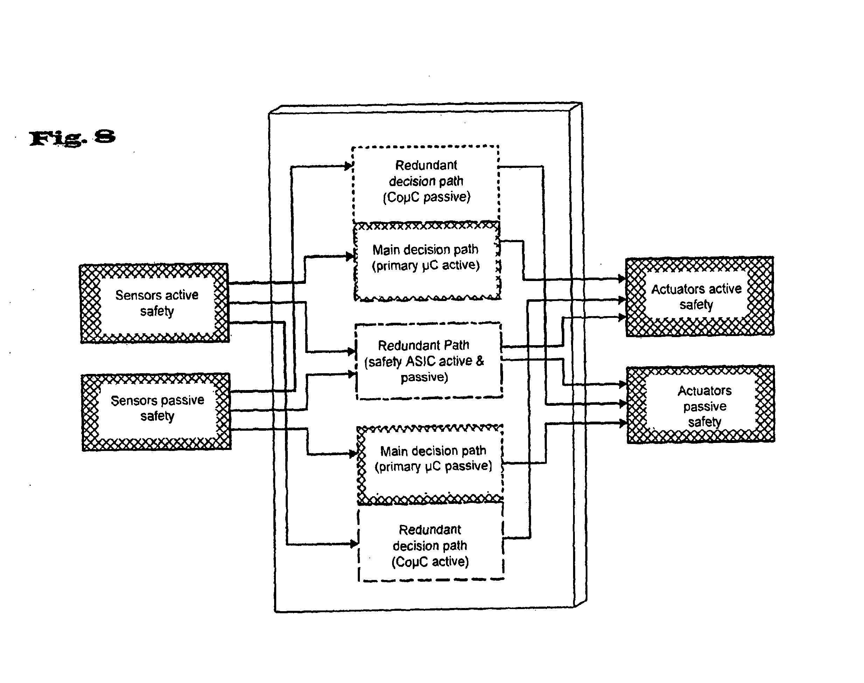

Figure 8 is a simplified overview of the realisation of the control system in accordance with Figure 7 in which the respective safety control functions are compiled in an overview.

## Claims

1. A control system for vehicles, in particular for the control of vehicle safety devices, comprising at least two subsystems (10, 12), each comprising a control means (18), which each communicate with at least one operating means (16), and a check means (20) to which the control means is connected and which can suppress the forwarding of control means data,
**characterised in that**
each subsystem also comprises a redundant control means (21) having a control algorithm which is equivalent to the control algorithm of the control means (18).

2. A control system in accordance with claim 1, **characterised in that** the check means (20) can suppress the forwarding of control means data via a switching means (30).

3. A control system in accordance with claim 1 or 2, **characterised in that** respective decision means (24) are connected after the control means (18) and the data from the switching means (30) connected after the control means (18) and from the redundant control means (21) are supplied to said decision means (24).

4. A control system in accordance with one of the claims 1 to 3, **characterised in that** status data of the check means (20) are supplied to the decision means (24).

5. A control system in accordance with one of the claims 1 to 4, **characterized in that** the control means (18) of one subsystem (10) is arranged with the redundant control means (21) of the other subsystem (12) in a first device/chip and the control means (18') of the other subsystem (12) is likewise arranged with the redundant control means (21') of said one subsystem (10) in a second device/chip.

6. A control system in accordance with one of the claims 1 to 5, **characterized in that** the check means (20") of the individual subsystems are arranged in a third device/chip.

7. A control system in accordance with claim 6, **characterized in that** a simplified control algorithm is implemented in each check means (20"), said simplified control algorithm mapping the control function and forwarding these simplified control data to the associated decision means of the subsystem.

8. A control system in accordance with one of the claims 1 to 7, **characterized in that** the first subsystem (10) represents a control device for active safety components and the second subsystem (12) represents a control device for passive safety components.

## Patentansprüche

1. Steuersystem für Fahrzeuge, insbesondere zur Steuerung von Fahrzeugsicherheitsvorrichtungen, mit mindestens zwei Subsystemen (10, 12) mit jeweils einem Steuermittel (18), die jeweils mit mindestens einem Betriebsmittel (16) kommunizieren, und einem Kontrollmittel (20), mit dem das Steuermittel verbunden ist und das die Weiterleitung von Steuermitteldaten unterdrücken kann,
**dadurch gekennzeichnet,**
**dass** jedes Subsystem zusätzlich ein redundantes Steuermittel (21) umfasst, das einen Steueralgorithmus aufweist, der äquivalent zu dem Steueralgorithmus des Steuermittels (18) ist.

2. Steuersystem nach Anspruch 1, **dadurch gekennzeichnet, dass** das Kontrollmittel (20) über ein Schaltmittel (30) die Weiterleitung von Steuermitteldaten unterdrücken kann.

3. Steuersystem nach Anspruch 1 oder 2, **dadurch gekennzeichnet, dass** den Steuermitteln (18) jeweils Entscheidungsmittel (24) nachgeschaltet sind und die Daten von den den Steuermitteln (18) nachgeschalteten Schaltmitteln (30) und von den redundanten Steuermitteln (21) den Entscheidungsmitteln (24) zugeführt werden.

4. Steuersystem nach einem der Ansprüche 1 bis 3, **dadurch gekennzeichnet, dass** den Entscheidungsmitteln (24) Statusdaten der Kontrollmittel (20) zugeführt werden.

5. Steuersystem nach einem der Ansprüche 1 bis 4, **dadurch gekennzeichnet, dass** das Steuermittel (18) eines Subsystems (10) mit dem redundanten Steuermittel (21) des anderen Subsystems (12) in einer ersten Vorrichtung/einem ersten Chip angeordnet ist und das Steuermittel (18`) des anderen Subsystems (12) gleichfalls mit dem redundanten Steuermittel (21`) des einen Subsystems (10) in einer zweiten Vorrichtung/einem zweiten Chip angeordnet ist.

6. Steuersystem nach einem der Ansprüche 1 bis 5, ddurch gekennzeichnet, dass die Kontrollmittel (20") der einzelnen Subsysteme in einer dritten Vorrichtung/einem dritten Chip angeordnet sind.

7. Steuersystem nach Anspruch 6, **dadurch gekennzeichnet, dass** in jedem Kontrollmittel (20") ein vereinfachter Steueralgorithmus implementiert ist, der die Steuerfunktion abbildet und der diese vereinfachten Steuerdaten an das zugeordnete Entscheidungsmittel des Subsystems weitergibt.

8. Steuerssytem nach einem der Ansprüche 1 bis 7, **dadurch gekennzeichnet, dass** das erste Subsystem (10) eine Steuervorrichtung für aktive Sicherheitskomponenten darstellt und das zweite Subsystem (12) eine Steuervorrichtung für passive Sicherheitskomponenten darstellt.

## Revendications

1. Système de commande pour véhicules, en particulier pour la commande de dispositifs de sécurité de véhicules, comprenant au moins deux sous-systèmes (10, 12), chacun comprenant un moyen de commande (18), qui communiquent chacun avec au moins un moyen d'exploitation (16) et un moyen de contrôle (20) auquel le moyen de commande est connecté et qui peuvent supprimer l'acheminement des données de moyen de commande,
**caractérisé en ce que**
chaque sous-système comprend également un moyen de commande redondant (21) ayant un algorithme de commande qui est équivalent à l'algorithme de commande du moyen de commande (18).

2. Système de commande selon la revendication 1, **caractérisé en ce que** le moyen de contrôle (20) peut supprimer l'acheminement des données de moyen de commande via un moyen de commutation (30).

3. Système de commande selon les revendications 1 ou 2, **caractérisé en ce que** des moyens de décision respectifs (24) sont connectés en aval du moyen de commande (18) et **en ce que** les données issues du moyen de commutation (30) connecté en aval du moyen de commande (18) et issues du moyen de commande redondant (21) sont fournies auxdits moyens de décision (24).

4. Système de commande selon une quelconque des revendications 1 à 3, **caractérisé en ce que** des données d'état du moyen de contrôle (20) sont fournies auxdits moyens de décision (24).

5. Système de commande selon une quelconque des revendications 1 à 4, **caractérisé en ce que** le moyen de commande (18) d'un sous-système (10) est disposé avec le moyen de commande redondant (21) de l'autre sous-système (12) dans un premier dispositif/une première puce électronique et **en ce que** le moyen de commande (18') de l'autre sous-système (12) est disposé au hasard avec le moyen de commande redondant (21') dudit sous-système (10) dans un second dispositif/une seconde puce électronique.

6. Système de commande selon une quelconque des revendications 1 à 5, **caractérisé en ce que** les moyens de contrôle (20") des sous-systèmes individuels sont disposés dans un troisième dispositif/une troisième puce électronique.

7. Système de commande selon la revendication 6, **caractérisé en ce qu'**un algorithme de commande simplifié est exécuté dans chaque moyen de contrôle (20"), ledit algorithme de commande simplifié appliquant la fonction de commande et acheminant ces données de commande simplifiées vers les moyens de décision du sous-système.

8. Système de commande selon une quelconque des revendications 1 à 7, **caractérisé en ce que** le premier sous-système (10) représente un dispositif de commande pour les composants de sécurité actifs et le second sous-système (12) représente un dispositif de commande pour les composants de sécurité passifs.
